# EUROPÄISCHE PATENTSCHRIFT

(11) **EP 4 409 165 B1**
(45) Veröffentlichungstag und Bekanntmachung des Hinweises auf die Patenterteilung: **22.07.2026**
(21) Anmeldenummer: 22808954.6
(22) Anmeldetag: 13.09.2022
(51) Int. Cl.: F16H 57/031, F16H 57/04

(54) **GETRIEBE MIT EINEM GEHÄUSETEIL UND EINEM DECKEL**
TRANSMISSION WITH A HOUSING PART AND A COVER
TRANSMISSION COMPRENANT UNE PARTIE BOÎTIER ET UN ÉLÉMENT DE RECOUVREMENT

(30) Priorität: 29.09.2021 CN 202111154025; 11.11.2021 DE 102021005577
(43) Veröffentlichungstag der Anmeldung: 07.08.2024
(73) Patentinhaber: SEW-EURODRIVE GmbH & Co. KG, 76646 Bruchsal (DE)
(72) Erfinder: WU, Zili, TIANJIN, 300381 (CN)
(86) Internationale Anmeldenummer: PCT/EP2022/025427
(87) Internationale Veröffentlichungsnummer: WO 2023/051947

(56) Entgegenhaltungen:
- WO-A1-2012/123044
- US-A1- 2021 001 712

## Beschreibung

Die Erfindung betrifft ein Getriebe mit einem Gehäuseteil und einem Deckel.

Es ist allgemein bekannt, dass im Innenraum eines Getriebes zur Schmierung der im Eingriff miteinander sich befindenden Verzahnungen Schmieröl angeordnet ist.

Aus der CN 2 12 536 610 U ist ein Getriebe bekannt.

Aus der DE 87 14 166 U1 ist eine Vorrichtung zum Zuführen von Öl aus einem einen Ölsumpf enthaltenden Gehäuse eines Zahnradgetriebes bekannt.

**Aus der** WO 2012/123044 A1 **ist als nächstliegender Stand der Technik eine Getriebevorrichtung bekannt.**

**Aus der** US 2021/001712 A1 **ist ein Fahrzeugantrieb bekannt.**

Der Erfindung liegt daher die Aufgabe zugrunde, ein Getriebe möglichst kompakt weiterzubilden.

Erfindungsgemäß wird die Aufgabe bei dem Getriebe nach den in Anspruch 1 angegebenen Merkmalen gelöst.

Wichtige Merkmale der Erfindung bei dem Getriebe mit einem Gehäuseteil und einem Deckel sind, dass am Gehäuseteil ein an der Oberfläche des Gehäuseteils hervorragender, einen Oberflächenbereich des Gehäuseteils umrandender Wulst ausgeformt ist,
insbesondere wobei der Wulst als Verdickung des Gehäuseteils ausgeformt ist,
wobei an dem Wulst eine fein bearbeitete Fläche, insbesondere ebene, insbesondere als Dichtfläche fungierende Fläche, ausgebildet ist,
wobei der Deckel mit dem Gehäuseteil verbunden ist,
wobei zwischen dem Deckel und der Fläche eine auf der Fläche angeordnete Dichtung, insbesondere Flachdichtung, angeordnet ist,
wobei ein Raumbereich vom Deckel und dem Oberflächenbereich sowie dem Wulst begrenzt ist,
wobei im Raumbereich ein Lagerdeckel angeordnet ist,
wobei der Lagerdeckel mit dem Gehäuseteil verbunden ist und an einer weiteren Fläche anliegt, die an einem weiteren Wulst ausgebildet ist, insbesondere als ebene und/oder fein bearbeitete weitere Fläche,
wobei die weitere Fläche unterbrochen ausgebildet ist.

Von Vorteil ist dabei, dass durch die Sammlung des Öls im Raumbereich, der als Zwischenpufferspeicher fungiert, ein Entwärmen des Öls effizient ausführbar ist. Denn der Raumberiech ist flach ausgeführt und der Deckel ist mit Kühlrippen ausführbar. Auf diese Weise ist ein guter Wärmeübergang vom Öl zur Umgebung hin bereitstellbar. Außerdem fließt der geförderte Luftstrom entlang des Deckels und verbessert somit die Entwärmung.

Somit ist bei kleinem Bauraum des Getriebes eine hohe Leistung erreichbar, also das Getriebe kompakt ausführbar.

Bei einer vorteilhaften Ausgestaltung läuft die Fläche, insbesondere Dichtfläche, auf welcher der Deckel aufliegt, vollständig ununterbrochen in Umfangsrichtung um die Drehachse Zwischenwelle um. Von Vorteil ist dabei, dass eine Abdichtung einfach und effektiv wirksam ist. Außerdem ist somit der Raumbereich zur Umgebung hin abgedichtet. Darüber hinaus bietet die Fläche eine gute Auflage für den Deckel beziehungsweise die Dichtung, so dass die Verbindung in hoher Schutzart ausführbar ist.

Bei einer vorteilhaften Ausgestaltung sind in die Fläche Gewindebohrungen eingebracht, in welche Schrauben eingeschraubt sind, deren Schraubenköpfe den Deckel zum Gehäuseteil hindrücken. Von Vorteil ist dabei, dass eine einfache kostengünstige Befestigung ausführbar ist. Die Gewindebohrung sind parallel zur Drehachse der Zwischenwelle ausgerichtet, insbesondere also parallel zur Normalenrichtung der eben ausgeführten Fläche.

Bei einer vorteilhaften Ausgestaltung weist das Getriebe eine drehbar gelagerte Zwischenwelle auf,
wobei die weitere Fläche in Umfangsrichtung um die Drehachse der Zwischenwelle herum unterbrochen ausgebildet ist, insbesondere also nicht vollständig umlaufend. Von Vorteil ist dabei, dass der Unterbrechungsbereich ein Durchfließen von Öl ermöglicht. Da der Lagerdeckel den Außenring des ersten Lagers der Zwischenwelle axial, insbesondere also in Richtung der Drehachse der Zwischenwelle begrenzt, fließt somit Öl durch den Unterbrechungsbereich zum ersten Lager des Getriebes.

Insbesondere sind zwei Unterbrechungen der weiteren Fläche ausgebildet, die sich diametral gegenüberliegen, insbesondere bezogen auf die Drehachse der Zwischenwelle. Somit fließt durch beide Unterbrechungsbereiche Öl zum ersten Lager der Zwischenwelle und ermöglicht daher eine noch weiter verbesserte Schmierung.

Bei einer vorteilhaften Ausgestaltung führt eine als erster Ölkanal fungierende Ausnehmung des Gehäuseteils vom Raumbereich zu einem ersten Lager der Zwischenwelle durch den unterbrochen ausgebildeten Bereich der weiteren Fläche. Von Vorteil ist dabei, dass die Schmierung des ersten Lagers der Zwischenwelle verbessert ist. Somit ist dieses Lager auch oberhalb des Ölpegels anordenbar und trotzdem zumindest im Betrieb des Getriebes mit Öl versorgbar. Das zweite Lager der Zwischenwelle wird im Ölsumpf des Getriebes angeordnet.

Bei einer vorteilhaften Ausgestaltung ist im Gehäuseteil eine als weiterer Ölkanal fungierende Ausnehmung ausbildet, welche vom Raumbereich zu einem Lager der abtreibenden Welle führt. Von Vorteil ist dabei, dass die Schmierung des ersten Lagers der abtreibenden Welle verbessert ist. Somit ist dieses Lager auch oberhalb des Ölpegels anordenbar und trotzdem zumindest im Betrieb des Getriebes mit Öl versorgbar. Das zweite Lager der abtreibenden Welle wird im Ölsumpf des Getriebes angeordnet.

Bei einer vorteilhaften Ausgestaltung ist im Gehäuseteil eine als dritter Ölkanal fungierende Ausnehmung ausbildet, welche vom Raumbereich zu einem ersten Lager der eintreibenden Welle führt,

insbesondere wobei das erste Lager als Doppellager ausgeführt ist,
insbesondere wobei die als dritter Ölkanal fungierende Ausnehmung mittig zwischen den beiden Lagern des Doppellagers der eintreibenden Welle mündet. Von Vorteil ist dabei, dass die Lager in einem Lagertopf aufnehmbar sind, der in eine Ausnehmung des Gehäuseteils vorkomplettiert mit eingestellter Lagerspannung einsteckbar ist. Zwar sind die Lager dann für Öl aus dem Ölsumpf schwer zugänglich, aber durch die erfindungsgemäße Versorgung über den dritten Ölkanal gut mit Öl versorgt.

Bei einer vorteilhaften Ausgestaltung weist die als dritter Ölkanal fungierende Ausnehmung eine im Gehäuseteil ausgebildete Abzweigung auf, die zwischen dem ersten Lager und einem zweiten Lager der eintreibenden welle mündet. Von Vorteil ist dabei, dass eine ausreichende Versorgung aller Lager der eintreibenden Welle sicherstellbar ist.

Bei einer vorteilhaften Ausgestaltung treibt die Zwischenwelle eine Saugpumpe an, welche Öl über eine Ölleitung und/oder über einen im Gehäuseteil ausgebildeten Kanal in den Raumbereich fördert. Von Vorteil ist dabei, dass die Saugpumpe passiv angetrieben ist.

Bei einer vorteilhaften Ausgestaltung ist die Saugpumpe an der vom ersten Lager der Zwischenwelle abgewandten Seite eines zweiten Lagers der Zwischenwelle angeordnet. Von Vorteil ist dabei, dass die Saugpumpe im Ölsumpf des Getriebes angeordnet ist und somit das Ansaugen mit wenig Kraftaufwand ermöglicht ist.

Bei einer vorteilhaften Ausgestaltung ist das erste Lager der Zwischenwelle und das erste Lager der abtreibenden Welle oberhalb des Ölpegels bei dauerhaftem Stillstand des Getriebes angeordnet. Von Vorteil ist dabei, dass durch die im Gehäuseteil, also innerhalb des Gehäuseteils, ausgebildeten Ölkanäle eine ausreichende Schmierölversorgung bewirkbar ist.

Bei einer vorteilhaften Ausgestaltung ist die eintreibende Welle drehfest mit einem Lüfter verbunden,
wobei der von dem Lüfter geförderte Luftstrom an Kühlrippen des Deckels entlanggeführt ist. Von Vorteil ist dabei, dass eine Kühlung effizient ausführbar ist und somit bei kleinem Bauraum des Getriebes eine hohe Leistung erreichbar ist, also das Getriebe kompakt ausführbar ist.

Bei einer vorteilhaften Ausgestaltung ist eine den Lüfter umgebende Lüfterhaube mit dem Gehäuseteil lösbar verbunden,
insbesondere wobei die Lüfterhaube den vom Lüfter geförderten Luftstrom entlang der Kühlrippen des Deckels leitet. Von Vorteil ist dabei, dass die Entwärmung effizient ausführbar ist.

Bei einer vorteilhaften Ausgestaltung sind die Kühlrippen parallel zur Drehachse der eintreibenden Welle ausgerichtet. Von Vorteil ist dabei, dass eine effiziente Entwärmung ausführbar ist.

Bei einer vorteilhaften Ausgestaltung sind am Gehäuseteil Fußbereiche ausgeformt, die auf der vom Deckel abgewandten Seite des Gehäuseteils angeordnet sind. Von Vorteil ist dabei, dass die abtreibende Welle auf der von den Fußteilen abgewandten Seite herausragen kann, insbesondere also vertikal orientiert ist, wenn die Fußteile auf einer horizontalen Bodenfläche aufgestellt sind.

Die Erfindung wird nun anhand von schematischen Abbildungen näher erläutert:

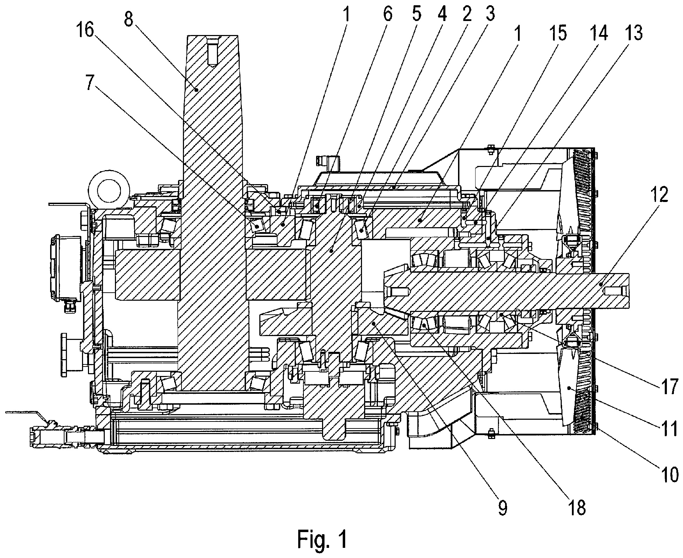

In der Figur 1 ist ein Querschnitt durch ein erfindungsgemäßes Getriebe mit Gehäuseteil 1 dargestellt.

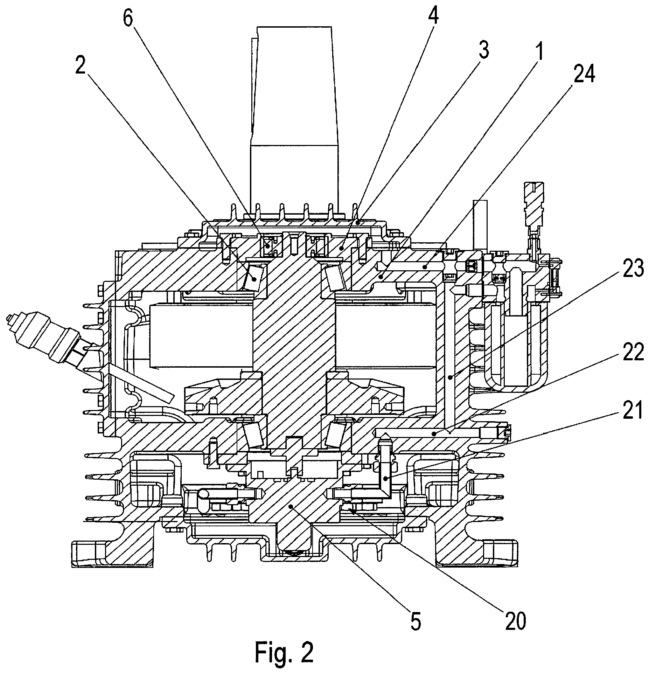

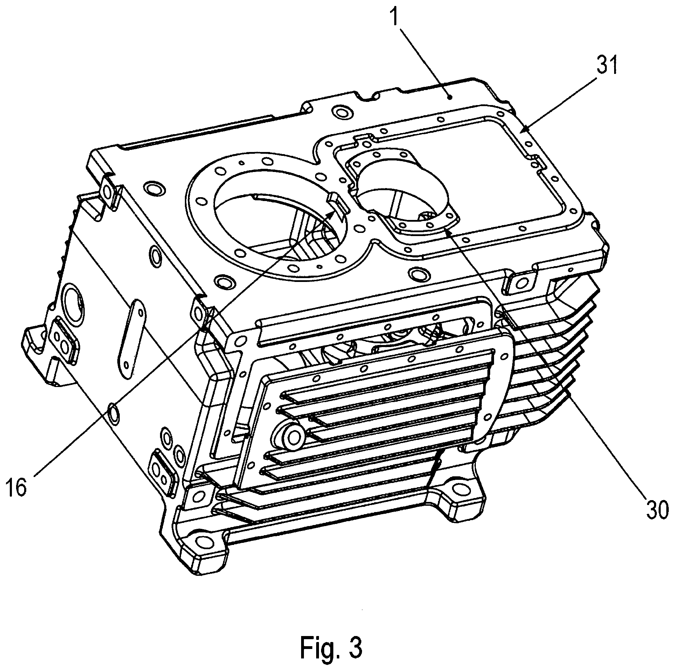

In der Figur 2 ist ein Längsschnitt durch das Getriebe dargestellt.

Wie in den Figuren gezeigt, weist das erfindungsgemäße Getriebe eine eintreibende Welle 12 auf, deren Lager in einem Lagerflansch aufgenommen sind, welcher mit dem Gehäuseteil 1 mittels Schrauben verbunden ist.

Die als verzahntes Ritzel ausgeführte eintreibende Welle 12 ist mit einem Zahnrad 9 im Eingriff, das mit einer Zwischenwelle 5 drehfest verbunden ist.

Die Zwischenwelle 5 ist vorzugsweise vertikal ausgerichtet.

Die eintreibende Welle 12 ist senkrecht zur Zwischenwelle 5 ausgerichtet, insbesondere, weil die eintreibende Getriebestufe des Getriebes eine Winkelgetriebestufe ist.

Eine weitere Verzahnung, die direkt an der Zwischenwelle 5 eingearbeitet ist oder die an einem mit der Zwischenwelle 5 drehfest verbundenen Zahnrad vorgesehen ist, ist mit einem mit der abtreibenden Welle 8 drehfest verbundenen weiteren Zahnrad im Eingriff.

Die abtreibende Welle 8 ist parallel zur Zwischenwelle 5 ausgerichtet.

Zumindest eines der Lager der abtreibenden Welle ist in dem Gehäuseteil 1 aufgenommen.

Ein Lager 2 der Zwischenwelle 5 ist ebenfalls im Gehäuseteil aufgenommen.

Am Gehäuseteil 1, insbesondere an der in vertikaler Richtung geschehenen Oberseite des Gehäuseteils 1, ist ein insbesondere in vertikaler Richtung hervor ragender, einen Oberflächenbereich des Gehäuseteils 1 umrandender Wulst ausgeformt, an dem eine fein bearbeitete, als Dichtfläche 31 fungierende Fläche vorgesehen ist, auf welche ein Deckel 3 aufgelegt ist, wobei eine zwischen Deckel 3 und Dichtfläche 31 angeordnete Dichtung, insbesondere Flachdichtung, den vom Deckel abgedeckten, zwischen Deckel 3 und Gehäuseteil 1 ausgebildeten Raumbereich abdichtet.

Eine von der Zwischenwelle 5 angetriebene Saugpumpe 20 saugt das im Innenraum des Getriebes vorgesehen Öl an, insbesondere aus dem Ölsumpf, und fördert das Öl durch die Ölleitung 21, welche zu einem im Gehäuseteil 1 angeordneten Ölkanal führt.

Dieser Ölkanal ist vorzugsweise aus bezogen auf die Drehachse der Zwischenwelle Radialbohrungen 22 und Axialbohrungen (23, 24) zusammengesetzt und mündet in den Raumbereich.

Somit bildet der Raumbereich ein Ölreservoir, insbesondere einen Zwischenpuffer. Aus dem Raumbereich werden dann über weitere Kanäle einerseits die Lager der abtreibenden Welle 8 und andererseits die Lager der Zwischenwelle 5 sowie auch der eintreibenden Welle 12 versorgt.

Der Deckel 3 weist an seiner Außenseite Kühlrippen auf, so dass das im Raumbereich sich befindende Öl zur Umgebung hin effizient entwärmt wird.

Ein Lagerdeckel 4 ist auf einer weiteren Dichtfläche 30 des Gehäuseteils 4 aufgesetzt, die ebenfalls auf einem insbesondere in vertikaler Richtung hervorragenden, einen Teilbereich des Oberflächenbereichs des Gehäuseteils 1 umrandenden, am Gehäuseteil 1 ausgeformten Wulst vorgesehen. Diese weitere Dichtfläche 30 ist fein bearbeitet. Der Lagerdeckel 4 ist auf diese weitere Dichtfläche 30 aufgelegt und mittels durch den Lagerdeckel 4 durchgehender Schrauben, die in in die weitere Dichtfläche eingebrachte Gewindebohrungen eingeschraubt sind, am Gehäuseteil 4 befestigt.

Zwischen Lagerdeckel 4 und Dichtfläche 30 ist eine Dichtung, insbesondere Flachdichtung, optional anordenbar. Eine Undichtigkeit an der weiteren Dichtfläche ist aber unschädlich, da durchsickerndes Öl zu den Lagern der Zwischenwelle 5 herunterfließt und somit Schmierung und Kühlung dieser Lager unterstützt.

Einerseits ist im Lagerdeckel 4 ein Justierlager 6 aufgenommen, das für Öl durchlässig ist und somit einen Ölstrom vom Raumbereich durch das Justierlager 6 hindurch zu dem in Richtung der Drehachse der Zwischenwelle 5 axial darunterliegenden Lager 2 ermöglicht. Hierdurch ist die Schmierung und Kühlung des Lagers 2 gewährleistbar.

Alternativ oder zusätzlich ist ein weiterer Ölstrom aus dem Raumbereich zu dem Lager 2 hin ermöglicht, indem die weitere Dichtfläche 30 nicht vollständig in Umfangsrichtung um die Drehachse der Zwischenwelle 5 umlaufend ausgebildet ist, sondern unterbrochen ausgeführt ist. in diesem Unterbrechungsbereich ist ein Abstand zwischen dem Lagerdeckel 4 und dem Gehäuseteil 1 bewirkt, so dass Öl hier eintreten kann und zu dem Lager 2 der Zwischenwelle 5 durchdringen kann, insbesondere durch den Lagerdeckel 4 hindurch.

Auch in die Dichtfläche 31 sind Gewindebohrungen eingebracht, in welche Schrauben eingeschraubt sind, deren Schraubenköpfe den Deckel 3 zur Dichtfläche 31 hindrücken und die durch den Deckel 4 hindurchragen.

Ein weiterer Kanal für Schmieröl ist im Gehäuseteil 1 vorgesehen. Dieser weitere Kanal mündet einerseits in den Raumbereich und andererseits in einen Bereich, welcher mittig zwischen den beiden Lagern eines Doppellagers 17 der eintreibenden Welle 12 angeordnet ist. Somit ist eine verbesserte Schmierung dieses Doppellagers ermöglicht.

Dabei ist das Doppellager 17 vorzugsweise in einem Lagertopf aufgenommen, der mit dem Gehäuseteil 1 mittels schrauben verbunden ist. Allerdings ragt der Lagertopf aus dem Gehäuseteil 1 zur Umgebung hin hervor, so dass das Doppellager 17 für Schmieröl aus dem Ölsumpf ohne die durch den weiteren Kanal zugeführte Schmierung unzulänglich mit Schmierstoff versorgt wäre.

Die senkrechte Projektion des Doppellagers 17 in eine Ebene, welche die Drehachse der eintreibenden Welle 12 enthält und deren Normalenrichtung parallel zur Drehachse der Zwischenwelle 5 ausgerichtet ist, ist außerhalb der senkrechten Projektion des Gehäuseteils 1 in diese Ebene angeordnet oder überlappt mit der senkrechten Projektion des Gehäuseteils 1 in diese Ebene. Daher ist der Zugang des Schmieröls aus dem Ölsumpf bis zu dem Doppellager 17 erschwert. Durch den weiteren Kanal wird jedoch Schmieröl vom Raumbereich direkt herangefördert und somit die Schmierung des Doppellagers 17 sichergestellt.

Die Dichtfläche 31, auf welcher der Deckel 3 aufliegt, läuft vollständig ununterbrochen in Umfangsrichtung um die Zwischenwelle 5 um. Somit ist eine hohe Schutzart erreichbar.

An dem zur Umgebung hin hervorragenden Bereich der eintreibenden Welle 12 ist ein Lüfter 11 drehfest mit der eintreibenden Welle 12 verbunden. Eine Lüfterhaube 10 umgibt des Lüfter 11 und ist mit dem Gehäuseteil 1 lösbar verbunden.

Der vom Lüfterrad 11 geförderte Luftstrom wird von der Lüfterhaube 10 derart gelenkt, dass er entlang der am Deckel 3 ausgeformten, zur Umgebung hin hervorragenden, sich parallel zur Drehachse der eintreibenden Welle erstreckenden Kühlrippen strömt.

Auf diese Weise ist eine verbesserte Entwärmung erreichbar und das sich im Raumbereich befindende Öl somit entwärmbar.

Der Raumbereich ist möglichst flach ausgeführt, so dass fast die ganze Länge des Deckels 3 nutzbar ist, um das Öl zu kühlen.

Insbesondere ist die Ausdehnung des Raumbereichs in Richtung der Drehachse der eintreibenden Welle größer, insbesondere mindestens zehnmal größer, als in Richtung der Drehachse der Zwischenwelle 5.

Auch das Gehäuseteil 1 weist an seiner äußeren Oberfläche nach außen hervorragende Kühlrippen auf, so dass die Entwärmung des Getriebes verbessert ist.

Außerdem deckt an zumindest einer Seitenwand des Gehäuseteils 1 ein Deckelteil eine Ausnehmung der Seitenwand ab, wobei das Deckelteil an seiner äußeren Oberfläche ebenfalls Kühlrippen aufweist.

Das Gehäuseteil 1 ist vorzugsweise zweistückig hergestellt, also aus einem Unterteil und einem darauf aufgesetzten Oberteil zusammengesetzt.

Bei weiteren erfindungsgemäßen Ausführungsbeispielen wird statt der Justierlager 6, die als Wälzlager, insbesondere Zylinderrollenlager, ausgeführt sind, kein Lager, sondern nur eine durchgehende Ausnehmung im Lagerdeckel 4 vorgesehen, insbesondere so dass ein Ölstrom vom Raumbereich zum Lager 2 zugelassen ist.

### Bezugszeichenliste

1 Gehäuseteil
2 Lager
3 Deckel
4 Lagerdeckel
5 Zwischenwelle
6 Justierlager
7 Lager
8 abtreibende Welle
9 Zahnrad
10 Lüfterhaube
11 Lüfter
12 eintreibende Welle
13 Radialbohrung
14 Axialbohrung
15 Radialbohrung
16 Kanal für Öl
17 Doppellager
18 Doppellager
20 Saugpumpe, insbesondere passive Saugpumpe
21 Ölleitung
22 bezogen auf die Drehachse der Zwischenwelle Radialbohrung
23 bezogen auf die Drehachse der Zwischenwelle Axialbohrung
24 bezogen auf die Drehachse der Zwischenwelle Radialbohrung
30 Dichtfläche für Lagerdeckel 4
31 Dichtfläche für Deckel 3

## Patentansprüche

1. Getriebe mit einem Gehäuseteil (1) und einem Deckel (3),
**wobei** am Gehäuseteil (1) ein **an der Oberfläche des Gehäuseteils (1)** hervorragender, einen Oberflächenbereich des Gehäuseteils (1) umrandender Wulst ausgeformt ist,
insbesondere wobei der Wulst als Verdickung des Gehäuseteils (1) ausgeformt ist,
wobei an dem Wulst eine fein bearbeitete Fläche, insbesondere ebene, insbesondere als Dichtfläche (31) fungierende Fläche, ausgebildet ist,
wobei der Deckel (3) mit dem Gehäuseteil (1) verbunden ist,
wobei zwischen dem Deckel (3) und der Fläche eine auf der Fläche angeordnete Dichtung, insbesondere Flachdichtung, angeordnet ist,
wobei ein Raumbereich vom Deckel (3) und dem Oberflächenbereich sowie dem Wulst begrenzt ist,
**dadurch gekennzeichnet, dass**
im Raumbereich ein Lagerdeckel (4) angeordnet ist,
wobei der Lagerdeckel (4) mit dem Gehäuseteil (1) verbunden ist und an einer weiteren Fläche anliegt, die an einem weiteren Wulst ausgebildet ist, insbesondere als ebene und/oder fein bearbeitete weitere Fläche,
wobei die weitere Fläche unterbrochen ausgebildet ist.

2. Getriebe nach Anspruch 1,
**dadurch gekennzeichnet, dass**
in die Fläche Gewindebohrungen eingebracht sind, in welche Schrauben eingeschraubt sind, deren Schraubenköpfe den Deckel (3) zum Gehäuseteil (1) hindrücken.

3. Getriebe nach einem der vorangegangenen Ansprüche,
**dadurch gekennzeichnet, dass**
das Getriebe eine drehbar gelagerte Zwischenwelle (5) aufweist,
wobei die weitere Fläche in Umfangsrichtung um die Drehachse der Zwischenwelle (5) herum unterbrochen ausgebildet ist, insbesondere also nicht vollständig umlaufend.

4. Getriebe nach einem der vorangegangenen Ansprüche,
**dadurch gekennzeichnet, dass**
die Fläche, insbesondere Dichtfläche, auf welcher der Deckel (3) aufliegt, läuft vollständig ununterbrochen in Umfangsrichtung um die Drehachse der Zwischenwelle (5) um.

5. Getriebe nach Anspruch 3,
**dadurch gekennzeichnet, dass**
eine als erster Ölkanal fungierende Ausnehmung des Gehäuseteils (1) vom Raumbereich zu einem ersten Lager (2) der Zwischenwelle (5) durch den unterbrochen ausgebildeten Bereich der weiteren Fläche führt.

6. Getriebe **nach Anspruch 5,**
**dadurch gekennzeichnet, dass**
im Gehäuseteil (1) eine als weiterer Ölkanal fungierende Ausnehmung ausbildet ist, welche vom Raumbereich zu einem Lager (7) einer abtreibenden Welle (8) **des Getriebes** führt.

7. Getriebe nach einem der vorangegangenen Ansprüche,
**dadurch gekennzeichnet, dass**
im Gehäuseteil (1) eine als dritter Ölkanal fungierende Ausnehmung ausbildet ist, welche vom Raumbereich zu einem ersten Lager (2) einer eintreibenden Welle **(12) des Getriebes** führt,
insbesondere wobei das erste Lager (2) als Doppellager (17) ausgeführt ist,
insbesondere wobei die als dritter Ölkanal fungierende Ausnehmung mittig zwischen den beiden Lagern des Doppellagers (17) der eintreibenden Welle (12) **des Getriebes** mündet.

8. **Getriebe nach Anspruch 7,**
**dadurch gekennzeichnet, dass**
die als dritter Ölkanal fungierende Ausnehmung eine im Gehäuseteil (1) ausgebildete Abzweigung aufweist, die zwischen dem ersten Lager (2) und einem zweiten Lager (7) der eintreibenden Welle (12) **des Getriebes** mündet.

9. Getriebe nach Anspruch 3,
**dadurch gekennzeichnet, dass**
die Zwischenwelle (5) eine Saugpumpe (20) antreibt, welche Öl über eine Ölleitung (21) und/oder über einen im Gehäuseteil (1) ausgebildeten Kanal (16) in den Raumbereich fördert.

10. Getriebe nach **Anspruch 9,**
**dadurch gekennzeichnet, dass**
die Saugpumpe (20) an der vom ersten Lager (2) der Zwischenwelle (5) abgewandten Seite eines zweiten Lagers (7) der Zwischenwelle (5) angeordnet ist.

11. Getriebe nach Anspruch 6,
**dadurch gekennzeichnet, dass**
das erste Lager (2) der Zwischenwelle (5) und das erste Lager (2) der abtreibenden Welle (8) **des Getriebes** oberhalb des Ölpegels bei dauerhaftem Stillstand des Getriebes angeordnet ist.

12. Getriebe nach einem der vorangegangenen Ansprüche,
**dadurch gekennzeichnet, dass**
eine eintreibende Welle (12) **des Getriebes** drehfest mit einem Lüfter (11) verbunden ist, wobei der von dem Lüfter (11) geförderte Luftstrom an Kühlrippen des Deckels (3) entlanggeführt ist.

13. **Getriebe nach Anspruch 12,**
**dadurch gekennzeichnet, dass**
eine den Lüfter (11) umgebende Lüfterhaube (10) mit dem Gehäuseteil (1) lösbar verbunden ist,
insbesondere wobei die Lüfterhaube (10) den vom Lüfter (11) geförderte Luftstrom entlang der Kühlrippen des Deckels (3) leitet.

14. **Getriebe nach einem der Ansprüche 12 bis 13,**
**dadurch gekennzeichnet, dass**
die Kühlrippen sich parallel zur Drehachse der eintreibenden Welle (12) ausgerichtet sind.

15. Getriebe nach einem der vorangegangenen Ansprüche,
**dadurch gekennzeichnet, dass**
am Gehäuseteil (1) Fußbereiche ausgeformt sind, die auf der vom Deckel (3) abgewandten Seite des Gehäuseteils (1) angeordnet sind.

## Claims

1. A gear unit with a housing part (1) and a cover (3),
wherein on the housing part (1) there is shaped a bead protruding from the surface of the housing part (1) and edging a surface region of the housing part (1),
in particular wherein the bead is shaped as a thickened portion of the housing part (1),
wherein a finish-machined face, in particular flat face, in particular one which acts as a sealing face (31), is formed on the bead,
wherein the cover (3) is connected to the housing part (1),
wherein a seal, in particular flat seal, arranged on the face is arranged between the cover (3) and the face,
wherein a spatial region is limited by the cover (3) and the surface region as well as the bead,
**characterised in that**
a bearing cover (4) is arranged in the spatial region,
with the bearing cover (4) being connected to the housing part (1) and lying against a further face which is formed on a further bead, in particular as a flat and/or finish-machined further face,
with the further face being formed interrupted.

2. A gear unit according to claim 1,
**characterised in that**
threaded bores are formed in the face, into which bores are screwed screws, the screw heads of which press the cover (3) towards the housing part (1).

3. A gear unit according to one of the preceding claims,
**characterised in that**
the gear unit has a rotatably mounted intermediate shaft (5),
with the further face being formed interrupted in the peripheral direction around the axis of rotation of the intermediate shaft (5), in particular therefore being not completely encircling.

4. A gear unit according to one of the preceding claims,
**characterised in that**
the face, in particular sealing face, on which the cover (3) lies runs completely uninterrupted in the peripheral direction around the axis of rotation of the intermediate shaft (5).

5. A gear unit according to claim 3,
**characterised in that**
a cutout in the housing part (1) which acts as a first oil duct leads from the spatial region to a first bearing (2) of the intermediate shaft (5) through the region of the further face which is formed interrupted.

6. A gear unit according to claim 5,
**characterised in that**
in the housing part (1) there is formed a cutout which acts as a further oil duct and which leads from the spatial region to a bearing (7) of an output shaft (8) of the gear unit.

7. A gear unit according to one of the preceding claims,
**characterised in that**
in the housing part (1) there is formed a cutout which acts as a third oil duct which leads from the spatial region to a first bearing (2) of an input shaft (12) of the gear unit,
in particular with the first bearing (2) being embodied as a duplex bearing (17),
in particular with the cutout which acts as a third oil duct opening centrally between the two bearings of the duplex bearing (17) of the input shaft (12) of the gear unit.

8. A gear unit according to claim 7,
**characterised in that**
the cutout which acts as a third oil duct has a branch formed in the housing part (1) which opens between the first bearing (2) and a second bearing (7) of the input shaft (12) of the gear unit.

9. A gear unit according to claim 3,
**characterised in that**
the intermediate shaft (5) drives a suction pump (20) which conveys oil by way of an oil line (21) and/or by way of a duct (16) formed in the housing part (1) into the spatial region.

10. A gear unit according to claim 9,
**characterised in that**
the suction pump (20) is arranged on that side of a second bearing (7) of the intermediate shaft (5) which faces away from the first bearing (2) of the intermediate shaft (5).

11. A gear unit according to claim 6,
**characterised in that**
the first bearing (2) of the intermediate shaft (5) and the first bearing (2) of the output shaft (8) of the gear unit are arranged above the oil level when the gear unit is long-lastingly at a standstill.

12. A gear unit according to one of the preceding claims,
**characterised in that**
an input shaft (12) of the gear unit is connected non-rotatably to a fan (11),
with the air stream conveyed by the fan (11) being guided along cooling fins of the cover (3).

13. A gear unit according to claim 12,
**characterised in that**
a fan cowl (10) surrounding the fan (11) is connected detachably to the housing part (1),
in particular with the fan cowl (10) conducting the air stream conveyed by the fan (11) along the cooling fins of the cover (3).

14. A gear unit according to one of claims 12 to 13,
**characterised in that**
the cooling fins are oriented parallel to the axis of rotation of the input shaft (12).

15. A gear unit according to one of the preceding claims,
**characterised in that**
foot regions which are arranged on that side of the housing part (1) which faces away from the cover (3) are shaped on the housing part (1).

## Revendications

1. Engrenage comprenant une partie de carter (1) et un couvercle (3), lequel présente sur la partie de carter (1) un bourrelet formé en saillie à la surface de la partie de carter (1), entourant une zone de surface de la partie de carter (1), en particulier le bourrelet étant formé comme un épaississement de la partie de carter (1), lequel présente sur le bourrelet une surface finement usinée, en particulier une surface plane, en particulier une surface servant de surface d'étanchéité (31), le couvercle (3) étant relié à la partie de carter (1), un joint, en particulier un joint plat, étant disposé sur la surface entre le couvercle (3) et la surface, une zone d'espace étant délimitée par le couvercle (3), la zone de surface et le bourrelet,
**caractérisé en ce que**
dans la zone d'espace, un couvercle de palier (4) est disposé, le couvercle de palier (4) étant relié à la partie de carter (1) et appliqué contre une surface supplémentaire, laquelle est formée sur un bourrelet supplémentaire, en particulier comme surface supplémentaire plane et/ou finement usinée, la surface supplémentaire étant formée de manière interrompue.

2. Engrenage selon la revendication 1, **caractérisé en ce que** des trous taraudés sont réalisés dans la surface, dans lesquels des vis sont vissées, dont les têtes de vis plaquent le couvercle (3) contre la partie de carter (1).

3. Engrenage selon l'une des revendications précédentes, **caractérisé en ce que** l'engrenage présente un arbre intermédiaire (5) monté rotatif, la surface supplémentaire étant formée de manière interrompue en direction circonférentielle autour de l'axe de rotation de l'arbre intermédiaire (5), en particulier donc non entièrement circulaire.

4. Engrenage selon l'une des revendications précédentes, **caractérisé en ce que** la surface, en particulier la surface d'étanchéité, sur laquelle repose le couvercle (3), s'étend de manière totalement ininterrompue en direction circonférentielle autour de l'axe de rotation de l'arbre intermédiaire (5).

5. Engrenage selon la revendication 3, **caractérisé en ce qu'** un évidement de la partie de carter (1) servant de premier canal d'huile mène de la zone d'espace à un premier palier (2) de l'arbre intermédiaire (5) à travers la zone formée de manière interrompue de la surface supplémentaire.

6. Engrenage selon la revendication 5, **caractérisé en ce qu'**un évidement servant de canal d'huile supplémentaire est formé dans la partie de carter (1), lequel mène de la zone d'espace à un palier (7) d'un arbre de sortie (8) de l'engrenage.

7. Engrenage selon l'une des revendications précédentes, **caractérisé en ce qu'**un évidement servant de troisième canal d'huile est formé dans la partie de carter (1), lequel mène de la zone d'espace à un premier palier (2) d'un arbre d'entrée (12) de l'engrenage, en particulier le premier palier (2) étant réalisé comme palier double (17), en particulier l'évidement servant de troisième canal d'huile débouchant au centre entre les deux paliers du palier double (17) de l'arbre d'entrée (12) de l'engrenage.

8. Engrenage selon la revendication 7, **caractérisé en ce que** l'évidement servant de troisième canal d'huile présente une dérivation formée dans la partie de carter (1), laquelle débouche entre le premier palier (2) et un second palier (7) de l'arbre d'entrée (12) de l'engrenage.

9. Engrenage selon la revendication 3, **caractérisé en ce que** l'arbre intermédiaire (5) entraîne une pompe d'aspiration (20), laquelle achemine l'huile via une conduite d'huile (21) et/ou via un canal (16) formé dans la partie de carter (1) dans la zone d'espace.

10. Engrenage selon la revendication 9, **caractérisé en ce que** la pompe d'aspiration (20) est disposée du côté opposé au premier palier (2) de l'arbre intermédiaire (5) d'un second palier (7) de l'arbre intermédiaire (5).

11. Engrenage selon la revendication 6, **caractérisé en ce que** le premier palier (2) de l'arbre intermédiaire (5) et le premier palier (2) de l'arbre de sortie (8) de l'engrenage sont disposés au-dessus du niveau d'huile lors de l'arrêt permanent de l'engrenage.

12. Engrenage selon l'une des revendications précédentes, **caractérisé en ce qu'** un arbre d'entrée (12) de l'engrenage est relié en rotation à un ventilateur (11), le flux d'air acheminé par le ventilateur (11) étant fait passer le long des ailettes de refroidissement du couvercle (3).

13. Engrenage selon la revendication 12, **caractérisé en ce qu'**un capot de ventilateur (10) entourant le ventilateur (11) est relié de manière amovible à la partie de carter (1), en particulier le capot de ventilateur (10) dirigeant le flux d'air acheminé par le ventilateur (11) le long des ailettes de refroidissement du couvercle (3).

14. Engrenage selon l'une des revendications 12 à 13, **caractérisé en ce que** les ailettes de refroidissement sont orientées parallèlement à l'axe de rotation de l'arbre d'entrée (12).

15. Engrenage selon l'une des revendications précédentes, **caractérisé en ce que** des zones de pied sont formées sur la partie de carter (1), lesquelles sont disposées du côté opposé au couvercle (3) de la partie de carter (1).
